# FASCICULE DE BREVET EUROPEEN

(11) **EP 1 332 678 B1**
(45) Date de publication et mention de la délivrance du brevet: **29.11.2006**
(21) Numéro de dépôt: 02024171.7
(22) Date de dépôt: 30.10.2002
(51) Int. Cl.: A23C 15/16, A23C 19/076, A23C 9/15

(54) **Préparation laitiére**
Milchprodukt
Milk product

(30) Priorité: 01.02.2002 CH 176022002
(43) Date de publication de la demande: 06.08.2003
(73) Titulaire: Comby Alexandre, 1957 Ardon (CH); Chatriand Stéphane, 1912 Leytron (CH)
(72) Inventeur: Chatriand, Stéphane, 1912 Leytron (CH)
(74) Mandataire: Micheli & Cie SA

(56) Documents cités:
- EP-A- 0 545 489
- EP-A- 0 818 149
- DE-A- 4 138 768
- GB-A- 1 450 269
- GB-A- 2 192 528
- US-A- 4 511 591
- US-A- 5 013 573
- DATABASE WPI Section Ch, Week 199844 Derwent Publications Ltd., London, GB; Class D13, AN 1998-509321 XP002239789 & HU 9 603 157 A (MAGYAR TEJGAZDASAGI KISERLETI), 28 août 1998 (1998-08-28)
- PATENT ABSTRACTS OF JAPAN vol. 016, no. 257 (C-0949), 11 juin 1992 (1992-06-11) & JP 04 058846 A (SNOW BRAND MILK PROD CO LTD), 25 février 1992 (1992-02-25)
- DATABASE FSTA [en ligne] INTERNATIONAL FOOD INFORMATION SERVICE (IFIS), FRANFURT/MAIN, DE; SOLMA-BARUTH H: "Eiweissangereicherte Milch und Milchprodukte." Database accession no. 73-1-03-p0273 XP002240779 & DEUTSCHE MILCHWIRTSCHAFT 1972 MILCHWIRTSCHAFTLICHE FORSCHUNGS- & UNTERSUCHUNGS GMBH, HAMBURG, FEDERAL REPUBLIC OF GERMANY, vol. 23, no. 48, pages 2057-2058, 2061 - 2063,
- DATABASE WPI Section Ch, Week 200021 Derwent Publications Ltd., London, GB; Class D13, AN 2000-245602 XP002239790 & RU 2 125 374 C (ORENBURGMOLOKO STOCK CO) , 27 janvier 1999 (1999-01-27)
- SCHULZ M: "Milchkundliches Speisen-Lexikon" 1981 , MILCHKUNDLICHES SPEISEN - LEXIKON, MUNCHEN, VOLKSWIRTSCHAFTLICHER VERLAG, DE, XP002239788 * page 533 - page 536 *

## Description

La présente invention concerne une préparation laitière, en particulier une préparation à base de beurre.

L'on peut actuellement trouver sur le marché un grand nombre de types de préparations à base de beurre, tels que des préparations allégées en matières grasses, des préparations aromatisées aux herbes, des préparations à consistance tendre pour faciliter leur étalement sur une tartine, etc.

Si certaines de ces préparations ont un bon comportement aux températures réfrigérantes et à température ambiante, aucune d'entre elles n'est vraiment adaptée pour pouvoir être utilisée en cuisine et servir de nappage. Lorsque ces préparations sont chauffées, en effet, elles se séparent très rapidement, typiquement vers 30 à 40°C, en une phase aqueuse et une phase grasse, ce qui est généralement peu esthétique. US-A-4,511,591 décrit une préparation laitière comprenant des protéines laitières, des matières grasses laitières et de l'eau. DE-A-4138768 décrit également une préparation laitière et son procédé de préparation.

La présente invention vise à proposer une préparation laitière, notamment une préparation à base de beurre, qui puisse être utilisée comme une sauce chaude et qui reste homogène jusqu'à des températures nettement supérieures à celles que l'on rencontre pour les préparations laitières connues.

A cette fin, il est prévu une préparation laitière comprenant un mélange homogène de protéines laitières, de matières grasses laitières et d'eau, les proportions relatives, en poids, de ces trois composants étant respectivement de 2,3 à 7 %, de 30 à 60 % et de 30 à 65 %.

Il a été découvert que la préparation ci-dessus, lorsqu'elle est chauffée à feu doux, fond en une crème onctueuse, homogène et de texture similaire à de la sauce béarnaise chaude. La séparation entre la phase aqueuse et la phase grasse n'est observée qu'à des températures élevées, typiquement de 60 à 85 °C.

Avantageusement, la proportion relative, en poids, des protéines laitières dans le mélange homogène est de 3 à 6 %, de préférence de 3,5 à 5,8 %, de préférence encore de 3,5 à 5,2 %, de préférence encore de 3,5 à 4,3 % et de préférence encore de sensiblement 3,9.

Dans un mode de réalisation particulier de l'invention, les proportions relatives, en poids, des protéines laitières, des matières grasses laitières et de l'eau dans le mélange homogène sont respectivement de 3,5 à 5,8 %, de 36 à 60 %, et de 35 à 60 %. Plus particulièrement, ces proportions relatives de protéines laitières, de matières grasses laitières et d'eau sont de préférence respectivement de 3,5 à 5,2 %, de 39 à 60 %, et de 35 à 56 %. Ces proportions relatives sont de préférence encore respectivement de 3,5 à 4,3 %, de 48 à 60 %, et de 35 à 47 %, et de préférence encore respectivement de sensiblement 3,9 %, 54 %, et 42 %.

Les protéines laitières, les matières grasses laitières et l'eau sont typiquement apportées par un mélange homogène de :
- beurre et fromage frais, ou
- beurre et crème, ou
- beurre, fromage frais et crème.

Pour atteindre l'objectif mentionné plus haut, la présente invention propose également une préparation laitière comprenant un mélange homogène de beurre, de fromage frais et de crème, les proportions relatives, en poids, de ces trois composants étant respectivement de 30 à 65 %, de 23 à 50 % et de 10 à 35 %.

Dans un mode de réalisation particulier de l'invention, les proportions relatives, en poids, du beurre, du fromage frais et de la crème dans le mélange homogène sont respectivement de 30 à 61 %, de 24 à 43 % et de 15 à 31 %. Plus particulièrement, ces proportions relatives de beurre, fromage frais et crème sont de préférence respectivement de 34 à 61 %, de 24 à 38 % et de 15 à 31 %. Ces proportions relatives sont de préférence encore respectivement de 49 à 61 %, de 24 à 31 % et de 15 à 20 %, et de préférence encore respectivement de sensiblement 55 %, sensiblement 27 % et sensiblement 18 %.

Typiquement, la teneur en matières grasses du fromage frais est de sensiblement 5 % et celle de la crème de sensiblement 35 %.

Afin de relever le goût de la préparation, celle-ci peut comprendre en outre des condiments tels que des herbes aromatiques et/ou de la moutarde à raison par exemple de sensiblement 11 % en poids.

Le pH de la préparation est de préférence de 4,5 à 5,5, et de préférence encore de sensiblement 4,9.

La présente invention propose également un procédé d'obtention de la préparation laitière définie ci-dessus, le procédé comprenant les étapes suivantes, réalisées à température ambiante :
- fouettage de la crème,
- ajout du fromage frais et du beurre à la crème ainsi fouettée, et
- malaxage du mélange de crème, fromage frais et beurre ainsi formé jusqu'à ce que ce mélange devienne homogène et qu'aucune goutte d'eau ne soit visible à sa surface.

Le malaxage du mélange de crème, fromage frais et beurre vise à dénaturer partiellement les structures quaternaire et tertiaire des protéines laitières et favoriser ainsi l'émulsification entre la phase aqueuse et la phase grasse. L'absence de goutte d'eau à la surface du mélange après le malaxage garantit que le mélange sera suffisamment homogène pour que la séparation entre la phase aqueuse et la phase grasse ne se produise qu'à des températures élevées.

On va maintenant décrire quelques exemples de réalisation de l'invention.

### Exemple 1

L'essai a porté sur une préparation laitière ayant la composition suivante :
49 % en poids de beurre
24,5 % en poids de fromage frais ou séré demi-gras (5 % de matières grasses)
15,7 % en poids de crème à 35 % de matières grasses
10,8 % en poids de condiments (moutarde, herbes aromatiques, sel, épices)
soit, en proportions relatives de beurre, fromage frais et crème (c'est-à-dire les proportions de beurre, fromage frais et crème pour un poids total de ces trois composants de 100 %) :
54,9 % en poids de beurre
27,5 % en poids de fromage frais
17,6 % en poids de crème

A partir des tables « La composition des aliments - Tableau des valeurs nutritives 1989-1990 », quatrième édition, de SOUCI-FACHMANN-KRAUT, Wissenschaftliche Verlagsgesellschaft MBH, Stuttgart, « Table de composition des aliments pour les consommatrices et les consommateurs », Association Suisse pour l'Alimentation, Zollikofen, Berne, 1993, et « Table belge de composition des aliments », deuxième édition, Nubel ASBL, Bruxelles, 1995, l'on a déduit les proportions en composants chimiques principaux de la partie purement laitière (sans les condiments) de la préparation :

| | |
|---|---|
| matières grasses laitières | 47,5 % en poids |
| protéines laitières | 3,4 % en poids |
| hydrates de carbone (lactose) | 1,6 % en poids |
| eau | 36,6 % en poids |

soit, en proportions relatives de matières grasses laitières, de protéines laitières et d'eau :

| | |
|---|---|
| matières grasses laitières | 54,3 % en poids |
| protéines laitières | 3,9 % en poids |
| eau | 41,8 % en poids |

Le pH de cette préparation était de 4,9.

Cette préparation a été obtenue selon le mode opératoire suivant :
- La crème a été foisonnée (montée en chantilly) dans un mélangeur-batteur à fouet (mouvement planétaire) de la marque KENWOOD, à la vitesse de 210 tours par minute pendant deux minutes à température ambiante.
- Le fromage frais et les condiments ont été mélangés à la crème.
- Le beurre, tempéré et fragmenté en petits morceaux, a ensuite été ajouté.
- L'ensemble a alors été malaxé à température ambiante pendant 15 minutes dans le même mélangeur-batteur qu'indiqué ci-dessus, à la vitesse de 210 tours par minute. A la fin de cette opération de malaxage, il a été vérifié qu'aucune gouttelette d'eau ne perlait à la surface de la préparation.

Cette préparation, chauffée à feux doux dans une casserole, a fondu en une sauce onctueuse qui est restée homogène jusqu'à une température comprise entre 75 et 85 °C.

### Exemple 2

L'essai a porté sur une préparation laitière ayant la composition suivante :
34 % en poids de beurre
30 % en poids de fromage frais ou séré demi-gras (5 % de matières grasses)
25 % en poids de crème à 35 % de matières grasses
11 % en poids de condiments (moutarde, herbes aromatiques, sel, épices)
soit, en proportions relatives de beurre, fromage frais et crème :
38,2 % en poids de beurre
33,7 % en poids de fromage frais
28,1 % en poids de crème

A partir des tables mentionnées plus haut, l'on a déduit les proportions en composants chimiques principaux de la partie purement laitière (sans les condiments) de la préparation :

| | |
|---|---|
| matières grasses laitières | 38,6 % en poids |
| protéines laitières | 4,1 % en poids |
| hydrates de carbone (lactose) | 2 % en poids |
| eau | 44,3 % en poids |

soit, en proportions relatives de matières grasses laitières, de protéines laitières et d'eau :

| | |
|---|---|
| matières grasses laitières | 44,4 % en poids |
| protéines laitières | 4,7 % en poids |
| eau | 50,9 % en poids |

Le pH de cette préparation était de 4,9.

Le mode opératoire utilisé a été le même que dans l'exemple 1.

Cette préparation avait une texture un peu plus mousseuse que dans l'exemple 1. Chauffée à feux doux dans une casserole, elle a fondu en une sauce onctueuse qui est restée homogène jusqu'à une température comprise entre 65 et 75 °C.

### Exemple 3

L'essai a porté sur une préparation laitière ayant la composition suivante :
30 % en poids de beurre
34 % en poids de fromage frais ou séré demi-gras (5 % de matières grasses)
25 % en poids de crème à 35 % de matières grasses
11 % en poids de condiments (moutarde, herbes aromatiques, sel, épices)
soit, en proportions relatives de beurre, fromage frais et crème :
33,7 % en poids de beurre
38,2 % en poids de fromage frais
28,1 % en poids de crème

A partir des tables mentionnées plus haut, l'on a déduit les proportions en composants chimiques principaux de la partie purement laitière (sans les condiments) de la préparation :

| | |
|---|---|
| matières grasses laitières | 35 % en poids |
| protéines laitières | 4,5 % en poids |
| hydrates de carbone (lactose) | 2,2 % en poids |
| eau | 47 % en poids |

soit, en proportions relatives de matières grasses laitières, de protéines laitières et d'eau :

| | |
|---|---|
| matières grasses laitières | 40,5 % en poids |
| protéines laitières | 5,2 % en poids |
| eau | 54,3 % en poids |

Le pH de cette préparation était de 4,9.

Le mode opératoire utilisé a été le même que dans l'exemple 1.

Cette préparation avait une texture plus mousseuse que dans les exemples 1 et 2. Chauffée à feux doux dans une casserole, elle a fondu en une sauce onctueuse qui est restée homogène jusqu'à une température comprise entre 65 et 70 °C.

## Revendications

1. Préparation laitière comprenant un mélange homogène de beurre, de fromage frais et de crème, les proportions relatives, en poids, de ces trois composants étant respectivement de 30 à 65 %, de 23 à 50 % et de 10 à 35 %.

2. Préparation laitière selon la revendication 1, **caractérisée en ce que** les proportions relatives, en poids, du beurre, du fromage frais et de la crème dans le mélange homogène sont respectivement de 30 à 61 %, de 24 à 43 % et de 15 à 31 %.

3. Préparation laitière selon la revendication 1, **caractérisée en ce que** les proportions relatives, en poids, du beurre, du fromage frais et de la crème dans le mélange homogène sont respectivement de 34 à 61 %, de 24 à 38 % et de 15 à 31 %.

4. Préparation laitière selon la revendication 1, **caractérisée en ce que** les proportions relatives, en poids, du beurre, du fromage frais et de la crème dans le mélange homogène sont respectivement de 49 à 61 %, de 24 à 31 % et de 15 à 20 %.

5. Préparation laitière selon la revendication 1, **caractérisée en ce que** les proportions relatives, en poids, du beurre, du fromage frais et de la crème dans le mélange homogène sont respectivement de sensiblement 55 %, de sensiblement 27 % et de sensiblement 18 %.

6. Préparation laitière selon l'une quelconque des revendications 1 à 5, **caractérisée en ce que** le fromage frais a une teneur en matière grasse de sensiblement 5 % et la crème a une teneur en matière grasse de sensiblement 35 %.

7. Préparation laitière selon l'une quelconque des revendications 1 à 6, **caractérisée en ce qu**'elle comprend en outre des condiments tels que des herbes aromatiques et/ou de la moutarde.

8. Préparation laitière selon la revendication 7, **caractérisée en ce que** la proportion des condiments est de sensiblement 11 % en poids.

9. Préparation laitière selon l'une quelconque des revendications 1 à 8, **caractérisée en ce qu**'elle est obtenue par malaxage à température ambiante des divers composants la constituant, le malaxage étant effectué jusqu'à ce qu'aucune goutte d'eau ne soit visible à la surface de la préparation.

10. Préparation laitière selon l'une quelconque des revendications 1 à 9, **caractérisée en ce que** son pH est de 4,5 à 5,5 et de préférence sensiblement égal à 4,9.

11. Procédé d'obtention d'une préparation laitière comprenant du beurre, du fromage frais et de la crème, les proportions relatives, en poids, de ces trois composants étant respectivement de 30 à 65 %, de 23 à 50 % et de 10 à 35 %, le procédé comprenant les étapes suivantes, réalisées à température ambiante :
- fouettage de la crème,
- ajout du fromage frais et du beurre à la crème ainsi fouettée, et
- malaxage du mélange de crème, fromage frais et beurre ainsi formé jusqu'à ce que ce mélange devienne homogène et qu'aucune goutte d'eau ne soit visible à la surface dudit mélange.

12. Procédé selon la revendication 11, **caractérisé en ce que**, avant le malaxage dudit mélange, l'on ajoute également à la crème fouettée des condiments tels que des herbes aromatiques et/ou de la moutarde.

## Claims

1. Milk product, comprising a homogeneous mixture of butter, cream cheese, and cream where the relative proportions in weight percent of these three components are 30 to 65 %, 23 to 50 %, and 10 to 35 %, respectively.

2. Milk product of claim 1, **characterised in that** the relative proportions in weight percent of butter, cream cheese, and cream in the homogeneous mixture are 30 to 61 %, 24 to 43 %, and 15 to 31 %, respectively.

3. Milk product of claim 1, **characterised in that** the relative proportions in weight percent of butter, cream cheese, and cream in the homogeneous mixture are 34 to 61 %, 24 to 38 %, and 15 to 31 %, respectively.

4. Milk product of claim 1, **characterised in that** the relative proportions in weight percent of butter, cream cheese, and cream in the homogeneous mixture are 49 to 61 %, 24 to 31 %, and 15 to 20 %, respectively.

5. Milk product of claim 1, **characterised in that** the relative proportions in weight percent of butter, cream cheese, and cream in the homogeneous mixture are substantially 55 %, substantially 27 %, and substantially 18 %, respectively.

6. Milk product of one of claims 1 to 5, **characterised in that** the cream cheese has a fat content of substantially 5 %, and the cream has a fat content of substantially 35 %.

7. Milk product of one of claims 1 to 6, **characterised in that** in addition it comprises condiments such as aromatic herbs and/or mustard.

8. Milk product of claim 7, **characterised in that** the proportion of the condiments is substantially 11 weight percent.

9. Milk product of one of claims 1 to 8, **characterised in that** it is obtained by kneading its different components at ambient temperature, the kneading being continued until drops of water are no longer visible on the product surface.

10. Milk product of one of claims 1 to 9, **characterised in that** its pH value is between 4.5 and 5.5, and preferably substantially equal to 4.9.

11. Process of making a milk product comprising butter, cream cheese, and cream, where the relative proportions in weight percent of these three components are 30 to 65 %, 23 to 50 %, and 10 to 35 %, respectively, and the process comprises the following steps realised at ambient temperature:
- whipping the cream,
- adding cream cheese and butter to the cream thus whipped, and
- kneading the mixture of cream, cream cheese, and butter thus formed until this mixture becomes homogeneous, and water drops are no longer visible on the surface of said mixture.

12. Process of claim 11, **characterised in that** prior to kneading said mixture, condiments such as aromatic herbs and/or mustard are added as well to the whipped cream.

## Patentansprüche

1. Milchprodukt, eine homogene Mischung von Butter, Frischkäse und Sahne umfassend, wobei die relativen Gewichtsanteile dieser drei Bestandteile 30 bis 65 %, 23 bis 50 % bzw. 10 bis 35 % betragen.

2. Milchprodukt nach Anspruch 1, **dadurch gekennzeichnet, dass** die relativen Gewichtsanteile an Butter, Frischkäse und Sahne in der homogenen Mischung 30 bis 61 %, 24 bis 43 % bzw. 15 bis 31 % betragen.

3. Milchprodukt nach Anspruch 1, **dadurch gekennzeichnet, dass** die relativen Gewichtsanteile an Butter, Frischkäse und Sahne in der homogenen Mischung 34 bis 61 %, 24 bis 38 % bzw. 15 bis 31 % betragen.

4. Milchprodukt nach Anspruch 1, **dadurch gekennzeichnet, dass** die relativen Gewichtsanteile an Butter, Frischkäse und Sahne in der homogenen Mischung 49 bis 61 %, 24 bis 31 % bzw. 15 bis 20 % betragen.

5. Milchprodukt nach Anspruch 1, **dadurch gekennzeichnet, dass** die relativen Gewichtsanteile an Butter, Frischkäse und Sahne in der homogenen Mischung im Wesentlichen 55 %, im Wesentlichen 27 % bzw. im Wesentlichen 18 % betragen.

6. Milchprodukt nach einem der Ansprüche 1 bis 5, **dadurch gekennzeichnet, dass** der Frischkäse einen Fettgehalt von im Wesentlichen 5 %, die Sahne einen Fettgehalt von im Wesentlichen 35 % hat.

7. Milchprodukt nach einem der Ansprüche 1 bis 6, **dadurch gekennzeichnet, dass** es ausserdem Gewürze wie würzige Kräuter und/oder Senf umfasst.

8. Milchprodukt nach Anspruch 7, **dadurch gekennzeichnet, dass** der Anteil der Gewürze im Wesentlichen 11 Gewichtsprozent beträgt.

9. Milchprodukt nach einem der Ansprüche 1 bis 8, **dadurch gekennzeichnet, dass** es durch Kneten seiner verschiedenen Bestandteile bei Umgebungstemperatur gewonnen wird, wobei das Kneten fortgesetzt wird, bis kein Wassertropfen mehr auf der Oberfläche des Produkts sichtbar ist.

10. Milchprodukt nach einem der Ansprüche 1 bis 9, **dadurch gekennzeichnet, dass** sein pH-Wert 4,5 bis 5,5 und bevorzugt im Wesentlichen 4,9 beträgt.

11. Verfahren zur Gewinnung eines Milchprodukts, das Butter, Frischkäse und Sahne umfasst, wobei die relativen Gewichtsanteile der drei Bestandteile 30 bis 65 %, 23 bis 50 % bzw. 10 bis 35 % betragen und das Verfahren die folgenden, bei Umgebungstemperatur ausgeführten Schritte umfasst:
- Schlagen der Sahne,
- Hinzufügen von Frischkäse und Butter zu der so geschlagenen Sahne und
- Kneten des so gebildeten Gemischs aus Sahne, Frischkäse und Butter, bis dieses Gemisch homogen wird und kein Wassertropfen mehr auf der Oberfläche der Mischung sichtbar ist.

12. Verfahren nach Anspruch 11, **dadurch gekennzeichnet, dass** vor dem Kneten des Gemischs auch Gewürze wie würzige Kräuter und/oder Senf zur geschlagenen Sahne hinzugefügt werden.
